(19) Europäisches Patentamt
European Patent Office
Office européen des brevets

(11) Publication number: 0 075 958
B1

# (12) EUROPEAN PATENT SPECIFICATION

(45) Date of publication of patent specification: 12.11.86

(51) Int. Cl.$^4$: C 08 F 220/28

(21) Application number: 82109028.9

(22) Date of filing: 29.09.82

## (54) Curable molding compositions.

(30) Priority: 30.09.81 US 307214

(43) Date of publication of application: 06.04.83 Bulletin 83/14

(45) Publication of the grant of the patent: 12.11.86 Bulletin 86/46

(84) Designated Contracting States: AT BE CH DE FR GB IT LI LU NL SE

(58) References cited:
EP-A-0 019 149
US-A-3 373 075

(73) Proprietor: UNION CARBIDE CORPORATION
39 Old Ridgebury Road
Danbury Connecticut 06817 (US)

(72) Inventor: Gardner, Hugh Chester
1273 Millstone River Road
Somerville, Somerset, NJ (US)

(74) Representative: Barz, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

EP 0 075 958 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to a process for producing fiber reinforced articles, such as automotive parts or appliance housings on fast mold cycles.

A novel process for producing fiber reinforced articles is described in EP—A—19 149. In this application, a process for rapidly fabricationg fiber reinforced thermoset resin articles is described. The fiber reinforcement is comprised of one or more fibers with a melting point or a glass transition temperature above about 130°C. The process comprises the steps of (a) providing in a heatable matched metal die mold, a bonded web of one or more of said fibers, (b) providing in an accumulator zone a liquid body of a thermosettable organic material having a viscosity determined at 120°C, in the absence of curing agent therefore, of less than about 50 centipoises, and which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold which is above the temperature at which the curing of said materials is initiated, and (f) opening said mold and removing the cured thermoset article therefrom. The fiber reinforcement may be from about 15 to about 80 weight percent of the weight of the molded article which is removed from the mold.

A major objective of the process of EP—A—19 149 is to produce molded articles with high mechanical properties utilizing short mold cycles. The shorter the mold cycle, the greater the productivity which can be achieved.

Major requirements for the resin in said process are low resin viscosity to allow rapid injection of the resin without movement of the reinforcing fibers and fast cure to allow the use of short molding cycles.

Many types of resins are described as useful in the process described in said EP—A—19 149. Included among these resins are vinyl ester resins, such as Derakane® 411—C—50, Derakane® 411—45 (available from Dow Chemical Co.), Epocryl® 321, Epocryl® 322 and Epocryl® 325 (available from Shell Chemical Co.). The vinyl esters in these resins have the following structure:

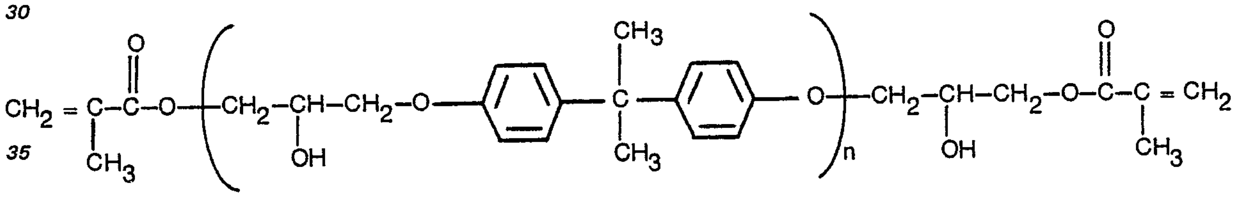 (I)

wherein the average value of n is between 2.5 and 4.

Vinyl esters such as (I) with average values of n between 1 and 2.5 are known in the art. For example, US—A—3,637,618 and 3,420,914 describe vinyl esters prepared by reacting a liquid diglycidyl ether of bisphenol A with methacrylic acid. The average value of n for these vinyl esters is a little larger than 1.0. Thermosetting resins were made by blending these vinyl esters with an equal weight of styrene.

However US—A—3,420,914 states the following in column 2, lines 3 to 7:

> "The use of these products for certain applications, however, is rather limited because of the low viscosity of the products. It would be desirable, for example, for using these products in applications, such as in matched metal die molding, to have a material of greater viscosity."

In said patent, the viscosity of the vinyl ester resin was increased by adding polyvinyl acetate or other similar thermoplastics.

Also, US—A—3,637,618 states in column 1, lines 49 to 56:

> "The use of these products for certain applications, however, is rather limited because of the low viscosity of the products. It was found that the viscosity could be controlled by the addition of certain vinyl acetate polymers. Although this modification allows the control of the viscosity to a large extent, there was still a need to increase the viscosity, to eliminate the surface tack and to improve the chemical resistance of glass reinforced laminates."

This patent teaches that the viscosity of the vinyl ester resins may be increased by adding a solid glycidyl polyether of a polyhydric phenol.

In contrast it has now been found that resins comprising a particular vinyl ester and a monoethylenically unsaturated monomer display improved performance as compared to other vinyl ester resins in the process described in EP—A—19 149. The resin compositions which are partly known as such from US—A—3 373 075 have low viscosities and cure more rapidly than other vinyl ester resins, i.e., they can be cured in less than 5 minutes, and preferably in less than 3 minutes. They also produce fiber-reinforced articles with superior strength and stiffness at elevated temperatures.

The present invention is directed to a process for preparing fiber reinforced articles which comprises

the steps of (a) providing in a heatable matched metal die mold a bonded web of one or more of said fibers, (b) providing in an accumulator zone a liquid body of a thermosettable organic material having a viscosity determined at 120°C, in the absence of curing agent, of less than 50 mPas, and which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom, wherein the improvement comprises using a thermosettable organic material comprising:

(a) a vinyl ester of the following formula:

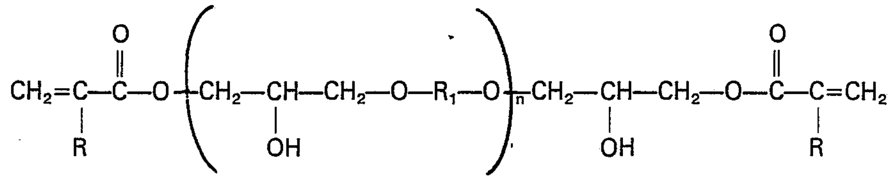

(II)

wherein the R's are independently hydrogen or methyl, $R_1$ is a cycloaliphatic or aromatic diol and n has an average value of from 1 to 2; and

(b) a monoethylenically unsaturated monomer which is soluble in and copolymerizable with (a).

In formula II, the cycloaliphatic or aromatic diols suitable for preparing the vinyl ester include 1,4-benzenedimethanol, 1,4-cyclohexanedimethanol, 2,2-bis[4-(2-hydroxyethoxy)phenyl]propane, 2,2-bis[4-(2-hydroxypropoxy)phenyl]propane, 2,2-bis(4-hydroxyphenyl)propane, 2,2-bis(4-hydroxycyclohexyl)-propane, 2,2-bis[3-bromo-4-hydroxyphenyl]propane, 2,2-bis[3,5-dibromo-4-hydroxyphenyl]propane, 1,2-bis(4-hydroxyphenyl)ethane and 1,1-bis(4-hydroxyphenyl)-2,2-dichloroethylene.

The vinyl ester may be prepared by the reaction of acrylic acid or methacrylic acid with an epoxy resin under conditions well known in the art. Typically a stoichiometry of one mole of acid per mole of epoxide is used, and greater than about 88 percent of the unsaturated acid is consumed in the reaction.

Epoxy resins used to form the vinyl ester are typically made using methods well known in the art. They include a batch method wherein the aliphatic or aromatic diol is condensed with an excess of epihalohydrin in the presence of a basic catalyst. Alternatively, epoxy resins may be prepared by chain extension of a diglycidyl ether (such as bisphenol-A diglycidyl ether) with additional diol.

The vinyl ester of formula II may also be made by reacting glycidyl acrylate or glycidyl methacrylate with a cycloaliphatic or aromatic diol.

The preferred vinyl ester is of the following formula:

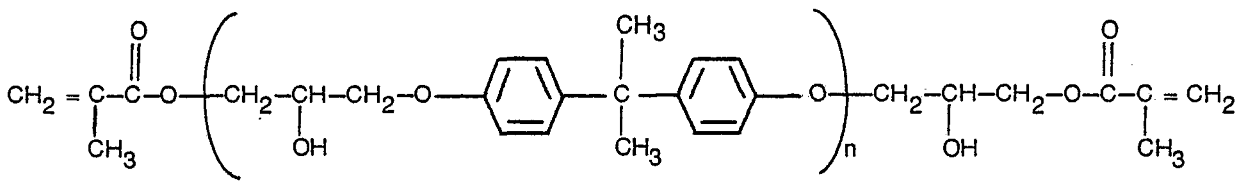

wherein n has an average value of from 1 to 2.

Component (b) of this invention is a monoethylenically unsaturated monomer which is soluble in and copolymerizable with (a).

These ethylenically unsaturated monomers contain at least a single

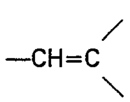

group, and preferably a

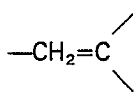

group and include styrene and its derivatives and homologues, lower alkyl esters of acrylic or methacrylic acid (such as ethyl acrylate, butyl acrylate, and methyl methacrylate), unsaturated nitriles (such as acrylonitrile and methacrylonitrile) and the like. Also the monomers include vinyl esters, vinyl acetate and vinyl propionate, maleic anhydride and the like. Other monoethylenically unsaturated monomers which may result from the incomplete reaction of the unsaturated acid with the diglycidyl ether may also be used. These include acrylic acid, methacrylic acid, and the monoacrylate- and monomethacrylate derivatives of

the diglycidyl ether. Mixtures of the aforementioned monomers may be effectively employed in the practice of this invention.

The most preferred ethylenically unsaturated monomer contemplated in the practice of this invention is styrene.

In the composition of this invention component (a) is present in amounts of from about 15 to about 85, preferably from about 30 to about 70 weight percent, and component (b) is present in amounts of from about 85 to about 15, preferably from about 70 to about 30 weight percent.

A free-radical curing catalyst which initiates curing via the co-reaction of the vinyl ester and the ethylenically unsaturated monomer is included in this invention. These curing catalysts include azo compounds, peroxides, peresters, perketals, and the like.

Azo and peroxide curing agents are described by, for example, Gallagher, et al. "Organic Peroxides Review, Plastics Design & Processing, July, 1978, pages 38—42, and August, 1978, pages 60—67, inclusive. The technology disclosed in those two articles is incorporated herein by reference. The choice of the specific peroxide or azo initiator for the purpose of curing the composition of this invention is within the purview of those having skill in this art, and the manner in which such peroxides and azo initiators effect a desirable cure is generally characterized in the aforementioned articles.

Examples of such curing catalysts include 2,2'-azo-bis-isobutyronitrile, benzoyl peroxide, lauroyl peroxide, di-t-butyl peroxide, t-butyl perpivalate, 2,5-dimethylhexane-2,5-di-perethylhexanoate, t-butyl peroctoate, t-butyl perneodecanoate, t-butyl perbenzoate, t-butyl percrotonate, t-butyl perisobutyrate, di-t-butyl perphthalate, 1,1-bis(t-butylperoxy)cyclohexane, 1,1-bis(t-butylperoxy), 3,3,5-trimethylcyclohexane, 2,2-bis(t-butylperoxy)propane, bis(4-t-butylcyclohexyl)peroxydicarbonate, methyl ethyl ketone peroxide, 2,4-pentanedione peroxide, bis(t-butylperoxy) diisopropylbenzene, 2-t-butylazo-2-cyano-4-methylpentane and ethyl 3,3-di(t-butylperoxy) butyrate. Many of these initiators are commercially available materials.

The peresters and perketals may be used in combination with an acid cure accelerator as described in NL—A—7,604,405. These acids include Bronsted acids with a $pK_a$ value lower than or equal to that of formic acid, such as hydrochloric acid, sulfuric acid, nitric acid, phosphoric acid, trichloroacetic acid, p-toluenesulfonic acid, and the like. Also Lewis acids or metal halides with Lewis acid properties, such as boron trifluoride and the chlorides of iron, cobalt, zinc and aluminum, may be used.

Additionally, the above described curing catalysts may be used in combination with other cure accelerators such as cobalt compounds. These cobalt compounds include cobalt naphthenate, cobalt-amine cure promoters (e.g. PEP®—183S, available from Air Products and Chemicals, Inc.), and the like.

Mixtures of the curing catalysts may be used herein, such as mixtures of peresters with perketals, perketals with azo compounds, and peresters with azo compounds.

The concentration of the curing agent can be varied within wide limits. As a representative range, the concentration can vary from about 0.25 to about 3.0 weight percent, preferably from about 0.5 to about 2.5 weight percent, and most preferably, from about 0.75 to about 2.0 weight percent, based on the weight of components (a) and (b).

It is furthermore desirable to utilize a vinyl polymerization inhibitor in those cases where the resin solution is to be stored and/or shipped. Suitable vinyl polymerization inhibitors are hydroquinone, para-benzoquinone, t-butyl catechol, t-butylhydroquinone, methylhydroquinone, 2,5-di-t-butylhydroquinone, hydroquinone monomethyl ether, the biphenyl derivatives described in US—A—4,158,027, and the like. The amount of inhibitor for the purpose of preventing vinyl polymerization can be that conventionally used, namely from about 10 to about 1000 ppm of the combined weight of components (a) and (b).

The compositions of this invention are prepared by solution blending the vinyl ester, the ethylenically unsaturated monomer, a free radical curing catalyst, and any other optional ingredients at ambient temperatures.

Fiber may be included in the compositions of this invention as reinforcing agents. These fibers have a melting point or a glass transition temperature above about 130°C. These fibers include fiberglass, carbon fibers, aromatic polyamide fibers (such as aramid fibers sold by E. I. duPont de Nemours & Company, Wilmington, Delaware, under the trademark of Kevlar®), metal fibers, such as aluminum and steel fibers, boron fibers, and the like.

The carbon fibers include those having a high Young's modulus of elasticity and high tensile strength. These carbon fibers may be produced from pitch, as described in US—A—3,976,729; 4,005,183 and 4,026,788, for example.

The preferred fibers are fiberglass, carbon fibers, aromatic polyamide fibers, and mixtures thereof.

The fibers which are suitable for use in this invention, preferably, have a length of at least 3.17 mm ($\frac{1}{8}$ inch), and an average length of at least 6.35 mm ($\frac{1}{4}$ inch). Preferred fiber lengths are from 2.54 to 5.08 cm (1 to 2 inches) or more. Continuous filaments may also be used.

It is also within the scope of this invention to include the use of particulate fillers such as milled glass or calcium carbonate in combination with the fiber. Other suitable fillers include glass microballons and phenolic resin spheres.

An article molded from the fiber reinforced composition of this invention contains from about 10 to about 75, preferably from about 40 to about 70 weight percent of the reinforcing fiber, and optionally from about 10 to about 40 weight percent of the particulate filler.

The composition of this invention may also include other ingredients, such as mold release agents, pigments, and the like.

Molded articles may be rapidly produced from the composition of this invention by several fabrication processes, including pultrusion, resin transfer molding and the process described in EP—A—19 149.

The preferred procedure is described in said EP—A—19 149. In this Application the apparatus comprises: (a) a heatable matched metal die mold containing one or more cavities therein with means for opening said mold to expose such cavities, and closing the same, and means for controlling the injection of a thermosettable organic liquid to such cavities when the mold is closed, (b) means associated with said mold, whereby one or more fibers in the form of an interlocked mass are provided in a portion of the cavities thereof when the mold is open to expose such cavities and prior to the injection of the thermosettable organic liquid to such cavities when the mold is closed, (c) accumulator means associated with said mold which can contain a thermosettable liquid transportable to means for controlling injection of said liquid to such cavities, and (d) cooling means associated with the means for controlling the injection of such liquid in to such cavities, whereby the temperature of the liquid in such injection means is maintained substantially below the temperature of the mold.

Alternative apparatus such as a polyurethane RIM (reaction injection molding) machine may also be used.

## Examples

The following Examples serve to illustrate specific embodiments of this invention and it is not intended that the invention shall be limited by the examples.

## Example 1

Preparation of a Low Viscosity Vinyl Ester Resin

A 3-liter round-bottomed flask equipped with a paddle stirrer, drying tube, thermometer, and a heating mantle was charged with 1164 g of Epon® 828 (a bisphenol A epoxy resin with a weight per epoxy equivalent of 194, supplied by Shell Chemical Co.) and 1.2 ml of tributyl phosphite. The mixture was heated for 1 hr at 100—120°C. Then 2.39 g of tetramethylammonium chloride, 0.40 g of methyl hydroquinone, and 516 g of methacrylic acid were added. The mixture was maintained at 100°C for 3 hours, and then heated at 115°C for an additional 8.5 hours. At the end of this period, the acid number of the mixture was 5, indicating that over 98% of the methacrylic acid had reacted. The product was a vinyl ester of formula I, wherein the value of "n" was about 1.2. The acid number is the milligrams of potassium hydroxide required to neutralize one gram of sample.

### Comparison of the Low Viscosity Vinyl Ester Resin and Derakane®

A resin for molding composites was prepared by blending the above vinyl ester with an equal weight of inhibited styrene. Several properties of this resin were measured and are listed in Table I. In the Table, the corresponding properties of Derakane® 411—C—50 (Control), a commercial vinyl ester resin, are also given. Analysis of the vinyl esters in the commercial resin indicated that the average value for "n" was about 2.5, which is outside the range specified in this invention.

The resin made with the vinyl ester prepared above had a significantly lower viscosity than the commercial resin.

PROPERTIES OF VINYL ESTER RESINS

| | Low Viscosity Vinyl Ester | Control |
|---|---|---|
| Styrene Content (wt%) | 50 | 50 |
| *Vinyl Ester Properties* | | |
| "n" Value | 1.2 | 2.5 |
| *Resin Properties* | | |
| Acid Number (mg KOH/g) | 2.5 | 2 |
| Viscosity at 25°C (mPas) | 14 | 150 |
| *Cure Characteristics (SPI Gel Time Test)*[a] | | |
| Gel Time (min) | 10.0 | 9.0 |
| Total Time (min) | 12.5 | 12.2 |
| Peak Temperature (°C.) | 221 | 198 |

a. At 82°C (180°F) with samples containing 1 part by weight of benzoyl peroxide per 100 parts of resin using the procedure described by A. L. Smith, 6th SPI, Chicago, I11; 1951, Reinforced Plastics Div. Sec. I, page 1.

Example 2

A series of 13.97 × 25.4 × 0.28 cm (5.5 × 10 × 0.11 inch) composites were molded at 140°C on a 30-ton press using the low viscosity vinyl ester resin of Example 1 and Derakane® 411—C—50. Each formulation contained 1 phr (parts by weight per 100 parts of resin) of t-butyl perbenzoate initiator and 0.5 phr of Zelec® UN (an organophosphate mold release agent sold by E. I. du Pont de Nemours, Inc., Wilmington, De.). All composites contained about 50 percent by weight of type EKM chopped strand mat (from PPG Industries, Pittsburgh, Pa.).

For all molding trials, the mold was closed and evacuated for 5 seconds prior to injection of resin. The resin was injected into the mld through a 9.52 mm (⅜ inch) diameter port about 2.54 cm (1 inch) from the 13.97 cm (5.5 inch)-long edge of the part. The minimum injection time was determined by decreasing the rate of injection until no relocation of the glass mat was observed. With Derakane® 411—C—50, a minimum injection time of 10 seconds was required. With the low viscosity resin, only 3 seconds was required.

When the injection was complete, a hydrostatic (i.e., dwell) pressure of about 2.07 MPa (300 psi) was maintained on the mold for 5 seconds. At the end of the dwell period, the injection nozzle was closed.

The minimum mold closed time was determined by opening the press at fixed intervals after the end of the dwell period. The minimum mold closed time was that required to produce a fully cured part with a hard tack-free surface. As shown in Table II, a much shorter mold closed time was needed with the resin prepared in Example 1 as compared to the Control (Derakane® 411C—50). Since high productivity is a key objective in the process, the faster cure speed of the low viscosity resin is a significant advantage.

Table II also shows that the room temperature mechanical properties of both vinyl ester composites are excellent. However at elevated temperature, the properties of the composite made with low viscosity resin are superior.

Therefore, compared to the control, in which the average value of "n" in formula I was about 2.5, the vinyl ester resin of this invention displayed improved performance in terms of a shorter injection time, a shorter mold closed time, and better retention of strength and stiffness at elevated temperature.

TABLE II
PROPERTIES OF COMPOSITES MOLDED WITH VINYL ESTER RESINS

| | Low Viscosity Vinyl Ester | Control |
|---|---|---|
| Minimum Injection Time Without Glass Relocation (sec) | 3 | 10 |
| Minimum Mold Closed Time (sec)[a] | 95 | 124 |
| Flexural Strength at 23°C ($N/mm^2 \times 6.895$) ($10^3$ psi)[b] | 41.1 | 42.1 |
| Flexural Modulus at 23°C ($N/mm^2 \times 6895$) ($10^6$ psi)[b] | 1.52 | 1.55 |
| Flexural Strength at 140°C ($N/mm^2 \times 6.895$) ($10^3$ psi)[b] | 5.9 | 2.8 |
| Flexural Modulus at 140°C ($N/mm^2 \times 6895$) ($10^6$ psi)[b] | 0.42 | 0.24 |
| Glass Content (wt%)[c] | 52 | 48 |

[a] Evacuation time (5 sec) + Injection time + Dwell time (5 sec) + Cure Time.
[b] Determined according to ASTM D—790.
[c] Determined by ashing.

Example 3

A 1-liter round bottomed flask equipped with a paddle stirrer, thermometer, dropping funnel, and an electric heating mantle was charged with 380 g of Epon 828 and 0.4 ml of tributyl phosphite. The mixture was heated under a nitrogen atmosphere at 100°C for 1 hour. Air was then admitted to the flask along with 0.79 g of benzyltrimethylammonium bromide, 0.13 g of methyl hydroquinone, and 172 g of inhibited methacrylic acid. The mixture was heated for 3 hours at 100°C, followed by 0.8 hours at 115°C. At the end of this period, the acid number of the mixture was 23, indicating that about 89 percent of the acid had reacted. The major component in the mixture was the vinyl ester of formula I, which had an "n" value of about 1.2.

Thermosetting resins were prepared from the above vinyl ester by blending with various amounts of styrene. Properties of the resins are listed in Table III. The data shows that these compositions have viscosities and cure characteristics which are similar to those of the vinyl ester resin prepared in Example 1.

TABLE III

| | | SPI Gel Time Test[a] | | |
|---|---|---|---|---|
| Styrene Content (wt%) | Viscosity at 25°C (mPas) | Gel Time (min) | Total time (min) | Peak Temperature (°C) |
| 30 | 164 | 11.3 | 12.6 | 203 |
| 40 | 46 | — | — | — |
| 50 | 14 | 9.2 | 11.3 | 221 |

[a] At 82°C (180°F). All samples contained 1 phr of benzoyl peroxide.

**Claims**

1. A process for preparing fiber-reinforced articles which comprises the steps of (a) providing in a heatable matched metal die mold a bonded web of one or more of said fibers , (b) providing in an

accumulator zone a liquid body of a thermosettable organic material having a viscosity determined at 120°C, in the absence of a curing agent, of less than 50 mPas, and which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom,

wherein the thermosettable organic material comprises:

(a) a vinyl ester of the following formula:

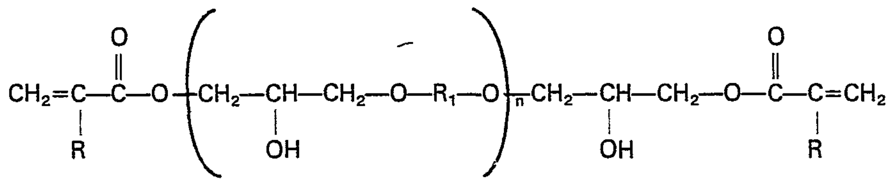

(II)

wherein the R's are independently hydrogen or methyl, $R_1$ is a cycloaliphatic or aromatic diol and n has an average value of from 1 to 2; and

(b) a monoethylenically unsaturated monomer which is soluble in and copolymerizable with (a).

2. A process as defined in claim 1 wherein the vinyl ester is of the following formula:

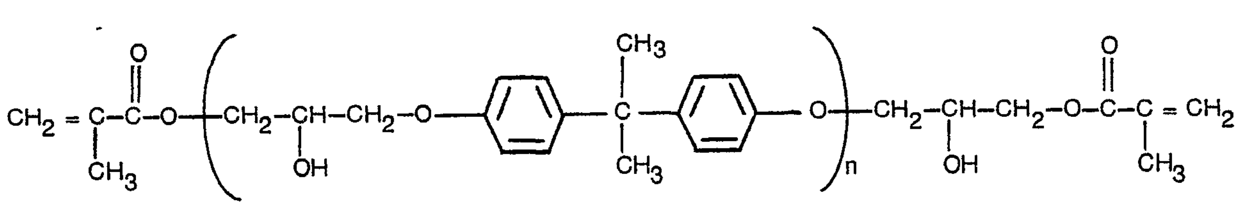

wherein n has an average value of from 1 to 2.

3. A process as defined in claim 1 or 2 wherein the monoethylenically unsaturated monomer comprises styrene.

4. A process as defined in any one of claims 1 to 3 wherein the thermosettable organic material contains from 15 to 85 weight percent of component (a).

5. A process as defined in any one of claims 1 to 4 wherein the thermosettable organic material contains from 85 to 15 weight percent of component (b).

6. A process as defined in any one of claims 1 to 55 wherein the fibers include fiberglass, carbon fibers or aromatic polyamide fibers.

**Patentansprüche**

1. Verfahren zur Herstellung von Faser-verstärkten Gegenständen, welches umfaßt die Schritte: (a) Vorsehen einer gebundenen Bahn aus einer oder mehreren Fasern in einem beheizbaren zweiteiligen Metall-Formwerkzeug, (b) Vorsehen in einer Akkumulatorzone eines flüssigen Körpers aus einem hitzehärtbaren organischen Material mit einer Viskosität von weniger als 50 mPa·s, bestimmt bei 120°C in Abwesenheit eines Härtungsmittels, welches beim Erhitzen zu einer hitzegehärteten Harzzusammensetzung härtbar ist, wobei die Viskosität des flüssigen Körpers in der Akkumulatorzone im wesentlichen konstant gehalten wird, indem man seine Temperatur unter derjenigen hält, bei der eine nennenswerte Härtung der Materialien erfolgt, (c) Schließen des die Bahn enthaltenden Werkzeugs, (d) Einspritzen zumindest eines Teils des hitzehärtbaren organischen Materials unter Druck aus der Akkumulatorzone in das Werkzeug, um dem Formhohlraum zu füllen, (e) Initiieren der Härtung der Materialien durch Erhitzen der Materialien in dem Werkzeug auf eine Temperatur, die über der Temperatur liegt, bei der die Härtung der Materialien initiiert wird, und (f) Öffnen des Werkzeugs und Entnehmen des hitzegehärteten Gegenstandes,

wobei das hitzehärtbare organische Material umfaßt:

(a) einen Vinylester der folgenden Formel:

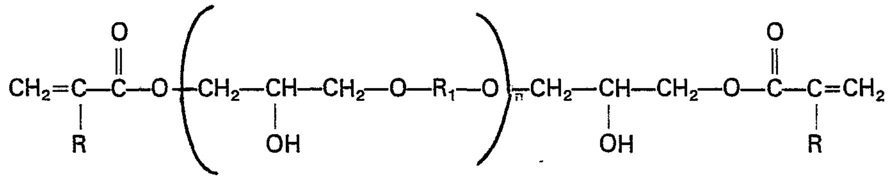

worin die Reste R unabhängig Wasserstoff oder Methyl sind, $R_1$ ein cycloaliphatisches oder aromatisches Diol ist und n einen durchschnittlichen Wert von 1 bis 2 hat; und

(b) ein monoethylenisch ungesättigtes Monomer, das in (a) löslich und damit copolymerisierbar ist.

2. Verfahren nach Anspruch 1, worin der Vinylester die folgende Formel:

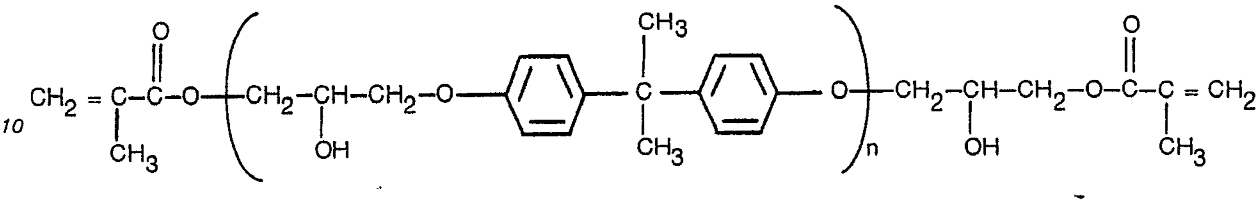

hat, worin n einen durchschnittlichen Wert von 1 bis 2 hat.

3. Verfahren nach Anspruch 1 oder 2, worin das monoethylenisch ungesättigte Monomer Styrol umfaßt.

4. Verfahren nach irgendeinem der Ansprüche 1 bis 3, worin das hitzehärtbare organische Material 15 bis 85 Gewichtsprozent der Komponente (a) enthält.

5. Verfahren nach irgendeinem der Ansprüche 1 bis 4, worin das hitzehärtbare organische Material 85 bis 15 Gewichtsprozent der Komponente (b) enthält.

6. Verfahren nach irgendeinem der Ansprüche 1 bis 5, worin die Fasern Glasfasern, Kohlefasern oder aromatische Polyamidfasern umfassen.

**Revendications**

1. Procédé de préparation d'articles renforcés à la fibre, qui comprend les étapes consistant (a) à introduire dans un moule métallique en deux parties pouvant être chauffé, une bande liée d'une ou plusieurs desdites fibres, (b) à placer dans une zone d'accumulation une masse liquide d'une matière organique thermodurcissable ayant une viscosité, déterminée à 120°C en l'absence d'un agent vulcanisant, de moins de 50 mPas, et qui est réticulable par chauffage en donnant une composition de résine thermodurcie, la viscosité de ladite masse liquide étant maintenue essentiellement constante dans la zone d'accumulation par maintien de sa température au-dessous de celle à laquelle la réticulation desdites matières est importante, (c) à fermer ledit moule contenant ladite bande, (d) à injecter une portion au moins de ladite matière organique thermodurcissable sous pression depuis la zone d'accumulation dans la moule pour remplir ainsi la cavité de ce dernier, (e) à déclencher la réticulation desdites matières en les soumettant, par chauffage du moule, à une température qui est au-dessus de la température à laquelle la réticulation desdites matières est déclenchée et (f) à ouvrir le moule et à démouler l'article thermodurci réticulé,

dans lequel la matière organique thermodurcissable comprend:

(a) un ester de vinyle de formule suivante:

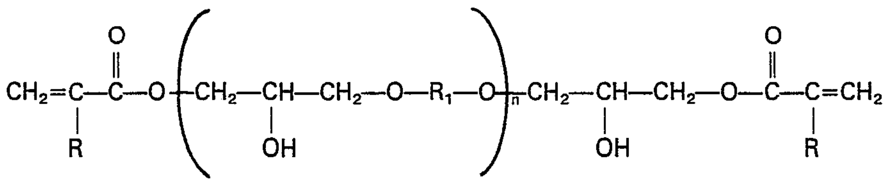

dans laquelle les groupes R représentent, indépendamment, l'hydrogène ou un groupe méthyle, $R_1$ est un diol cycloaliphatique ou aromatique et *n* a une valeur moyenne de 1 à 2; et

(b) un monomère à non-saturation monoéthylénique qui est soluble dans (a) et copolymérisable avec lui.

2. Procédé tel que défini dans la revendication 1, dans lequel l'ester de vinyle répondd à la formule suivante:

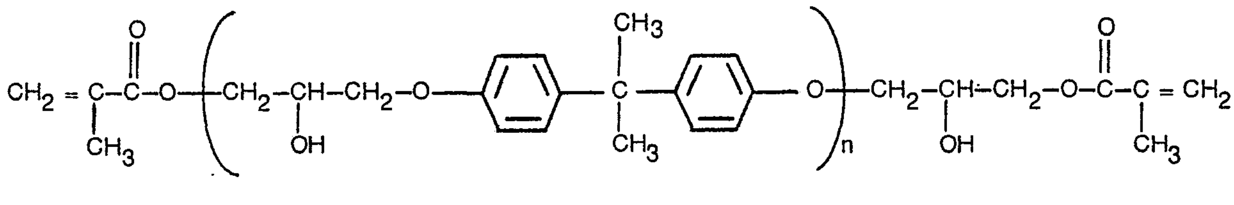

dans laquelle *n* a une valeur moyenne de 1 à 2.

3. Procédé tel que défini dans la revendication 1 ou 2, dans lequel le monomère à non-saturation mono-éthylénique comprend le styrène.

4. Procédé tel que défini dans l'une quelconque des revendications 1 à 3, dans lequel la matière organique thermodurcissable contient 15 à 85% en poids de composant (a).

5. Procédé tel que défini dans l'une quelconque des revendications 1 à 4, dans lequel la matière organique thermodurcissable contient 85 à 15% en poids de composant (b).

6. Procédé tel que défini dans l'une quelconque des revendications 1 à 5, dans lequel les fibres comprennent du verre en fibre, des fibres de carbone ou des fibres de polyamides aromatiques.